# EUROPEAN PATENT APPLICATION

(11) **EP 4 679 708 A1**
(43) Date of publication of application: **14.01.2026**
(21) Application number: 25187974.8
(22) Date of filing: 07.07.2025
(51) Int. Cl.: H02P 29/032, H02P 29/64, H02P 6/08

(54) **VARIABLE CURRENT CLIP CONTROL IN POWER TOOL**

(30) Priority: 09.07.2024 US 202418767091
(71) Applicant: Black & Decker, Inc., New Britain, CT 06053 (US)
(72) Inventor: COATES, Marcell E., Baltimore, 21206 (US); McKILLICAN, Jason D., Baltimore, 21075 (US); DAVE, Aarsh D., Elkridge, 21075 (US); SMITH, David J., Columbia, 21045 (US); PALMER, Joseph M., Columbia, 21044 (US)
(74) Representative: SBD IPAdmin

(57) **Abstract**

A tool is provided including a motor, a power switch circuit disposed between a power source and the motor, and a control unit that controls the power switch circuit to drive the motor. The control unit is configured to apply a current clip threshold to a current passing through a bus line located between the power source and the power switch circuit to maintain a peak current of the bus line at approximately the current clip threshold. The control unit is further configured to variably control the current clip threshold based on the current passing through the bus line.

## Description

This application relates to current control in a power tool, and in particular to controlling a current clip threshold of a power tool.

Power tools, such as drills, saws, and grinders, are widely used in various industries and applications. These tools typically incorporate electric motors to provide the necessary mechanical power. To ensure safe and efficient operation, it is common practice to apply a current limit to the motor, thereby maintaining the average current below a predetermined threshold.

In certain power tools, particularly compact power tools with small diameters, the motor can be susceptible to overheating due to high current levels. The compact size of these tools often limits the available space for effective heat dissipation, leading to potential thermal issues. Excessive heat can degrade the motor's performance, reduce its lifespan, and even pose safety risks to the user. Conventionally, current and/or temperature limits are utilized that shut down the power tool operation in the event of high current and/or high temperature conditions. However, repeated occurrence of tool shut down events can be frustrating to the user. What is needed is a method that avoid high heat conditions for the motor without significant compromising the motor performance and repeated tool shutdown events.

According to an embodiment, a tool is provided including: a motor; a power switch circuit disposed between a power source and the motor; and a control unit that controls the power switch circuit to drive the motor and is configured to apply a current clip threshold to a current passing through a bus line located between the power source and the power switch circuit to maintain a peak current of the bus line at approximately the current clip threshold, wherein the control unit is configured to variably control the current clip threshold based on the current passing through the bus line.

The power source preferably comprises a battery receptacle of the tool, arranged to connect to a battery pack. When a battery pack is connected to the battery receptacle in use, the power source advantageously comprises the combined battery pack and battery receptacle.

It is to be understood that any feature, including any preferred or other optional feature, of any embodiment may be a feature, including a preferred or other optional feature, of any other embodiment.

In an embodiment, the control unit is configured to detect an average current passing through the bus line, and dynamically control the current clip threshold as a function of the average current.

In an embodiment, the control unit is configured to step down and/or reduce the current clip threshold if the average current exceeds an average current threshold for a prescribed duration.

In an embodiment, the control unit is configured to step up and/or increase the current clip threshold if the average current does not exceed the average current threshold for the prescribed duration.

In an embodiment, the control unit is configured to detect an over-current condition on the bus line and reduce the current clip threshold in a stepwise manner as long as the over-current condition persists.

In an embodiment, the control unit is configured to increase the current clip threshold in a stepwise fashion when the over-current condition is no longer present until a default current clip threshold value is reached.

In an embodiment, the control unit is configured to apply the current clip threshold over a plurality of drive cycles, wherein within a first drive cycle, the control unit shuts off supply of power to the motor for the remainer of the cycle after a measure of instantaneous current exceeds the current clip threshold, and resumes supply of power to the motor at the beginning of a second drive cycle if the measure of instantaneous current is below the current clip threshold.

In an embodiment, the control unit comprises a controller, and a comparator configured to receive a first signal associated with the current passing through the bus line and a second signal associated with the current clip threshold received from the controller, wherein the controller dynamically controls the second signal.

In an embodiment, the control unit further comprises an average current detection unit including an analog-to-digital converter and a digital filter to obtain an average current passing through the bus line.

In an embodiment, the controller is configured to further control the current clip threshold as a function of a temperature associated with the motor and/or the power switch circuit.

According to an embodiment, a tool is provided including: a motor; a power switch circuit disposed between a power source and the motor; and a control unit that controls the power switch circuit to drive the motor and is configured to apply a current limit to a current passing through a bus line located between the power source and the power switch circuit to cap the current at the current limit over a plurality of drive cycles of the motor, wherein the control unit is configured to detect an average value of the current passing through the bus line and to dynamically set the current limit as a function of the average value of the current.

The power source preferably comprises a battery receptacle of the tool, arranged to connect to a battery pack. When a battery pack is connected to the battery receptacle in use, the power source advantageously comprises the combined battery pack and battery receptacle.

In an embodiment, the controller is configured to maintain a peak current of the bus line at approximately the current limit.

In an embodiment, the control unit is configured to step down and/or reduce the current limit if the average current exceeds an average current threshold for a prescribed duration.

In an embodiment, the control unit is configured to step up and/or increase the current clip threshold if the average current falls below the average current threshold for the prescribed duration.

In an embodiment, the control unit is configured to reduce the current limit in a stepwise pattern based on a look-up table when the average current exceeds the average current threshold, wherein each step in the stepwise pattern includes a current limit value and an associated threshold time.

In an embodiment, for a given current limit value, the associated threshold time is set to a first duration if the average current exceeds a first average current threshold, and is set to a second duration if the average current exceeds a second average current threshold, wherein the second average current threshold is greater than the first average current threshold and the second duration is smaller than the first duration.

In an embodiment, the control unit is configured to apply the current limit over a plurality of drive cycles, wherein within a first drive cycle, the control unit shuts off supply of power to the motor for the remainer of the cycle after a measure of instantaneous current exceeds the current limit, and resumes supply of power to the motor at the beginning of a second drive cycle if the measure of instantaneous current is below the current limit.

In an embodiment, the control unit comprises a controller, and a comparator configured to receive a first signal associated with the current passing through the bus line and a second signal associated with the current limit received from the controller, wherein the controller dynamically controls the second signal.

In an embodiment, wherein the control unit further comprises an average current detection unit including an analog-to-digital converter and a digital filter to obtain the average current.

The various advantages of the embodiments will become apparent to one skilled in the art by reading the following specification and appended claims, and by referencing the following drawings, in which:
FIG. 1 depicts an exemplary power tool, in this example an angle grinder, according to an embodiment.
FIG. 2 depicts a perspective view of the brushless DC (BLDC) motor, according to an embodiment.
FIG. 3 depicts a cross-sectional view of the motor, according to an embodiment.
FIG. 4 depicts an exemplary block circuit diagram of the power tool components, including a motor control and power module, according to an embodiment.
FIG. 5 depicts an exemplary power switch circuit having a three-phase inverter bridge circuit, according to an embodiment.
FIG. 6 depicts an exemplary waveform diagram of a pulse-width modulation (PWM) drive sequence of the three-phase inventor bridge circuit of FIG. 5 within a full 360-degree conduction cycle.
FIG. 7 depicts a block diagram of an average current detection unit, according to an embodiment.
FIG. 8 depicts a waveform diagram of a bus current waveform and a motor phase current waveform through a single phase of the motor, according to an embodiment.
FIG. 9 depicts a partial waveform diagram of the bus current waveform within a single cycle with application of a current clip threshold, i.e., a current limit, according to an embodiment.
FIG. 10 depicts a waveform diagram of the bus current waveform with the application of the current clip threshold, according to an embodiment.
FIG. 11 depicts a waveform diagram of the bus current waveform with the application of a variable current clip threshold, according to an embodiment.
FIG. 12 depicts a waveform diagram of the current clip threshold and the average current, according to an embodiment.
FIG. 13 depicts an example flow diagram of a current clip step-back (CCSB) process, according to an embodiment.

Corresponding reference numerals indicate corresponding parts throughout the several views of the drawings.

Example embodiments will now be described more fully with reference to the accompanying drawings.

The following description illustrates the claimed invention by way of example and not by way of limitation. The description clearly enables one skilled in the art to make and use the disclosure, describes several embodiments, adaptations, variations, alternatives, and uses of the disclosure, including what is presently believed to be the best mode of carrying out the claimed invention. Additionally, it is to be understood that the disclosure is not limited in its application to the details of construction and the arrangements of components set forth in the following description or illustrated in the drawings. The disclosure is capable of other embodiments and of being practiced or being carried out in various ways. Also, it is to be understood that the phraseology and terminology used herein is for the purpose of description and should not be regarded as limiting.

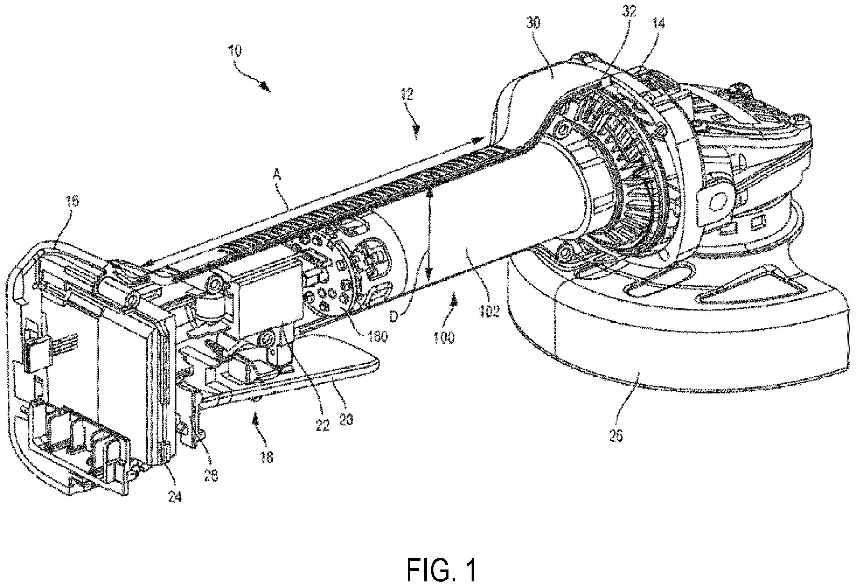

FIG. 1 depicts a perspective view of a power tool 10 including an elongate housing 12 that houses a brushless direct-current (BLDC) motor 100, a gear case 14 mounted forward of the housing 12, and a battery receptacle 16 formed at the foot of the housing 12 opposite the gear case 14. In this view, the housing 12 is made of a pair of clamshells, one of which is removed to expose the BLDC motor 100 and associated components disposed within the housing 12, according to an embodiment.

In an embodiment, battery receptacle 16 is configured to receive a removable and rechargeable power tool battery pack therein. The battery pack, not shown in this figure, may be, for example a lithium-ion battery pack having a nominal voltage of 18V.

In an embodiment, power tool 10 further includes a trigger assembly 18 mounted on the housing 12 and includes a paddle switch 20 engageable by a user and a switch assembly 22 disposed within the housing 12. In an embodiment, switch assembly 22 may include a mechanical contact switch, a logic switch, or a combination thereof, arranged to activate or deactivate supply of power from the battery pack.

In addition, in an embodiment, power tool 10 includes a control module 24, which in this example is disposed near the battery receptacle 16. In an embodiment, control module 24 includes a programmable controller, such as a microcontroller device, not shown in this figure, mounted on a printed circuit board. The controller includes code that controls supply of electric power to the motor according to various criteria, such as load, speed, and power requirements. In an embodiment, control module 24 may further include a series of power switches, also not shown, configured as a three-phase inverter circuit, controlled by the controller for driving the motor 100. Details of the controller and power switcher are beyond the scope of this disclosure. Reference is made, by way of example, to US Patent No. 10,680,494; US Patent No. 10,615,733; and US Patent No. 10,693,344, all of which are incorporated herein by reference in their entireties, as various examples of motor control and drive configurations.

In an embodiment, the power tool 10 is an angle grinder by way of example, though it is noted that the principles described herein may be utilized in various other power tools such as a cutout tool, a polisher, a wrench, a drill, an impact driver, a hammer drill, a circular saw, a reciprocating saw, a band saw, a nailer, etc.

In an embodiment, the gear case 14 receives a motor shaft that is rotatable with the motor 100 and includes a series of gears and supports an output spindle driven by the motor shaft. In an embodiment, the output spindle may be oriented perpendicularly to the motor shaft. In an embodiment, the gear case 14 may additionally include a spindle lock engageable by a user to prevent rotation of the output spindle while the user is mounting a grinding or cutting wheel onto the output spindle. In an embodiment, the gear case 14 may also include a retention flange configured to apply a biasing force to the grinding or cutting wheel for increased security, as described in US Patent Application No. 17/412,448 filed on August 26, 2021, which is incorporated herein by reference in its entirety. In an embodiment a guard 26 may be mounted on a collar portion of the gear case 14 around the grinding or cutting accessory.

In an embodiment, the power tool 10 is designed as a body-grip power tool with the housing 12 being sized to fit into a hand grip of a user with relative ease even in the area around the motor 100. As such, in an embodiment, the housing 12 has a maximum diameter D of approximately 35 to 45 mm, preferably approximately 37 to 43 mm, more preferably at most 40 mm, around most of the length of the motor 100. In an embodiment, this maximum diameter D extends along length A of the housing 12, beginning proximate the battery receptacle 16 and a pivoting connection point 28 of a distal end of the paddle switch 20, to a frontal end 30 of the housing 12 formed around a fan baffle 32 radially containing a motor fan (not shown) and a front end of the motor 100. In an embodiment, the front end of the housing 12 includes a larger diameter than the remainder the housing 12 by a factor of approximately 1.7 to 2. It is noted, however, that in some applications, the rear of the gear case 14, and thus the front end of the housing 12, include a diameter that is approximately equal to or up to 20% greater than the diameter of the remainder of the housing 12. In an embodiment, the housing 12 includes a maximum diameter D along at least 80% of the entire length of the motor 100, preferably along at least 85% of the entire length of the motor 100.

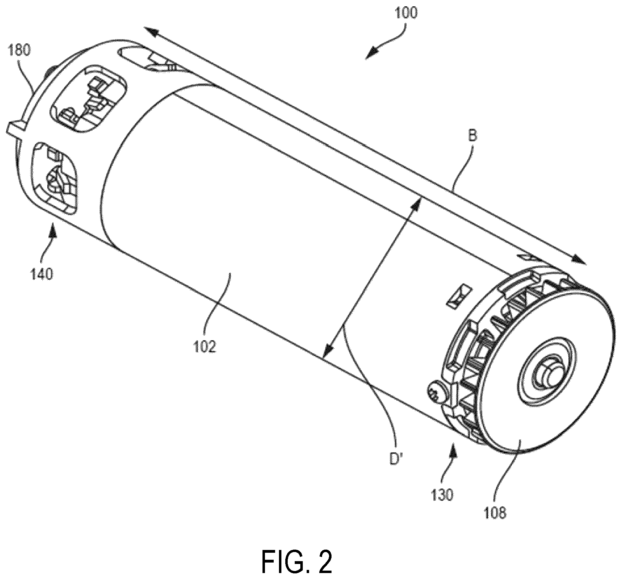

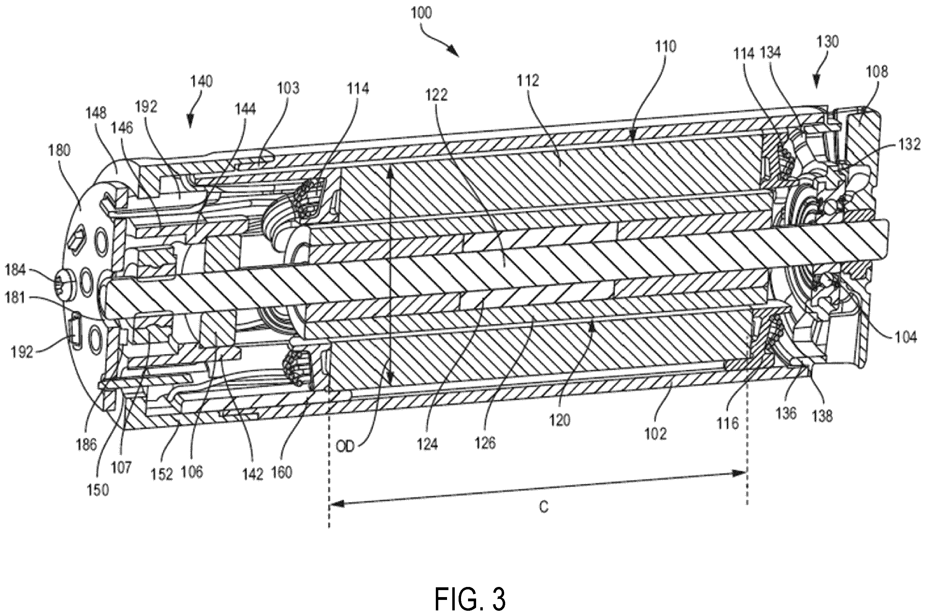

FIG. 2 depicts a perspective view of the brushless DC (BLDC) motor 100, according to an embodiment. FIG. 3 depicts a cross-sectional view of the motor 100, according to an embodiment.

In an embodiment, the motor 100 includes a motor housing (or motor can) 102 having a substantially cylindrical body and two open ends that supports the components of the motor 100 described below. In an embodiment, the motor can 102 may be made of steel or other metal to provide a reliable mounting structure for the motor components. The motor 100 further includes a stator assembly 110 and a rotor assembly 120 mounted on a rotor shaft 122.

In an embodiment, stator assembly 110 is securely received within the inner diameter of the motor can 102 and includes a stator core 112, which may be formed of a series of laminated steel members, and a series of stator windings 114 supported by the stator core 112. In an embodiment, the rotor assembly 120 includes one or more rotor core segments 124 mounted on the rotor shaft 122 in series, each rotor core segment 124 supporting a series of permanent magnets or a permanent magnet ring 126 mounted on its outer surface. In an embodiment, the rotor assembly 120 is disposed within the stator assembly 110. As stator windings 114 are energized in a controlled sequence, the magnetic interaction between the stator windings 114 and the permanent magnets 126 causes the rotation of the rotor assembly 120 relative to the stator assembly 110. For details on constructional and operational principles of the stator and the rotor, reference is made to US Patent No. 10,923,989, and US Patent Publication No. 2021/0194320, both of which are incorporated herein by reference in their entireties.

In an embodiment, stator assembly 110 further includes a front end-insulator 116 mounted on an axial end of the stator core 112 to insulate the stator windings 114 from the stator core 112. Specifically, front end-insulator 116 includes a series of teeth corresponding to the teeth of the stator core 112, and the stator windings 114 are wound around the teeth of the front end-insulator 116 to avoid direct contact with the metal part of the stator core 112. Reference is made to US Patent No. 10,328,566, as an example of a stator end-insulator construction.

In addition, stator assembly 110 further includes a rear end-insulator 160, herein referred to as a routing insulator. Routing insulator 160 is mounted on the other axial end of the stator core 112 opposite the front end-insulator 116, and similarly acts to insulate the stator windings 114 from the stator core 112. However, routing insulator 160 has a greater axial length than the front end-insulator 116, and it includes features for routing the magnet wire between stator windings 114 and supporting additional components associated with the stator windings 114, as will be described later in detail. In an embodiment, routing insulator 160 extends beyond the rear axial end of the motor can 102.

In an embodiment, motor 100 additionally includes a front bearing support structure (also referred to as front bearing bridge 130), and a rear bearing support structure (also referred to as rear bearing bridge) 140, mounted on the two axial ends of the motor can 102 adjacent two ends of the stator assembly 110. These features will be described below in detail.

In an embodiment, the motor 100 has an overall total length B, as defined from a front end of the front bearing bridge 130 to a rear end of the rear bearing bridge 140, of approximately 100mm to 130 mm, preferably approximately 110 mm to 120 mm. In an embodiment, the stator assembly 110 has length C, as defined by the length of the stator core 112, of approximately 45 mm to 75 mm, preferably approximately 55 mm to 65 mm, and more preferably no greater than 60 mm. As such, the difference between the overall total length B of the motor and the length C of the stator assembly 110 is approximately 45 mm to 65 mm, preferably approximately 50 mm to 60 mm. In an embodiment, length B is greater than length C by approximately 52% to 63%.

In an embodiment, the motor 100 also has a diameter D', as defined by the outer diameter of the motor can 102, of approximately 31 mm to 36 mm, preferably approximately 33 mm to 35 mm, preferably no more than 34 mm. The stator assembly 110 further includes an outer diameter OD, as defined by the outer diameter of the stator core 112, of approximately 27 mm to 34 mm, preferably approximately 28 mm to 33 mm, preferably approximately 29 mm to 32 mm. These dimensions allow for the motor 100 to fit into the small girth of the housing 12 of the power tool 10 while producing enough power for grinding or cutting applications. In an embodiment, the motor 100 is configured to produce maximum long duration power output of at least approximately 450 watts.

In an embodiment, the length B of the motor 100 is at least approximately 50%, more preferably 55%, and even more preferably 60%, of the overall length of the tool housing 12 including frontal end 30 and the battery receptacle 16.

In an embodiment, stator assembly 110 may include a segmented design, where a series of (for example, six) discrete core segments are separately wound and then joined together to form the stator core 112. This configuration is particularly suitable for a small-diameter stator assembly 110, where each segment may be wound to the desired number of turns prior to forming the stator core 112. This configuration, however, has drawbacks associated with cost of manufacturing, reliability, noise and vibration, and cogging torque.

Alternatively, and preferably, stator core 112 is formed with a non-segmented annular body and a series of inwardly-projecting teeth on which the stator windings 114 are wound. Stator core 112 may be a solid-core unit made as a single piece. Alternatively, stator core 112 may be made of laminated steel sheets placed together and interlocked to form a uniform body.

A challenge associated with a non-segmented stator core having a small diameter of, e.g., 36 mm or less is the winding process of the stator windings 114, particularly if a high slot fill is needed to produce a high level of power density. The winding process may be particularly challenging where the length of the stator is large to compensate for the smaller diameter.

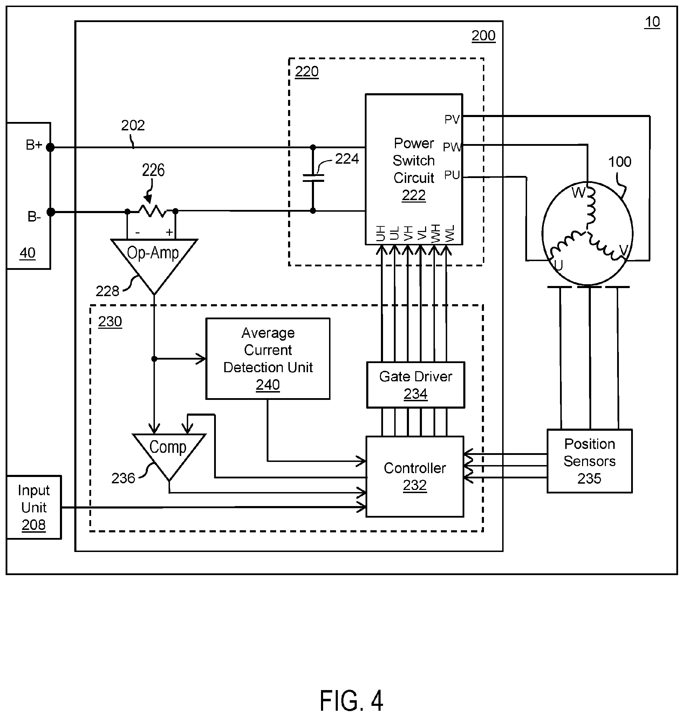

FIG. 4 depicts an exemplary block circuit diagram of the power tool 10 components, including the motor control and power module 200 disposed between battery receptacle 40 and motor 100, according to an embodiment.

In an embodiment, motor control and power module 200 includes a power unit 220 and a control unit 230.

In an embodiment, power unit 220 may include a power switch circuit 222 that receives electric power on a DC bus line 202 from the B+/B- terminals of the battery receptacle 40 and supplies power to the motor windings to drive the motor 100. In an embodiment, power switch circuit 222 may be a three-phase bridge driver circuit including six controllable semiconductor power switches, e.g. Field Effect Transistors (FETs), Insulated-Gate Metal Transistors (IGBTs), etc. In an embodiment, the power unit 220 further includes a bus capacitor 224 disposed across the DC bus line 202 to absorb residual voltage irregularities.

In an embodiment, FETs may be more suitable for relatively lower power / lower voltage power tool applications (e.g., power tools having operating voltages of approximately 10 to 80 V), and IGBTs may be more suitable for relatively higher voltage / higher voltage power tool applications (e.g., power tools having operating voltages of approximately 100 - 240 V).

In an embodiment, control unit 230 may include a controller 232 and a gate driver 234. In an embodiment, controller 232 is a programmable device (e.g., a micro-controller, micro-processor, etc.) arranged to control a switching operation of the power devices in power switching circuit 222. In an embodiment, controller 232 handles all aspect of motor control, including, but not limited to, motor drive and commutation control (including controlling the switching operation of the power switching circuit 222 to control motor speed, forward/reverse drive, phase current limit, start-up control, electronic braking, etc.), motor stall detection (e.g., when motor suddenly decelerates or motor current rapidly rises), motor over-voltage detection and shutdown control, motor or module over-temperature detection and shutdown control, electronic clutching, and other control operations related to the motor.

In an embodiment, controller 232 receives rotor rotational position signals from a set of position sensors 235 provided in close proximity to the motor 100 rotor. In an embodiment, position sensors 235 may be Hall sensors. It is noted, however, that other types of positional sensors may be alternatively utilized. It is also be noted that controller 232 may be configured to calculate or detect rotational positional information relating to the motor 100 rotor without any positional sensors (in what is known in the art as sensorless brushless motor control).

In an embodiment, controller 232 may also receive an ON/OFF signal from an input unit 208. Input unit 208 may correspond to the switch assembly 22 of FIG 1 and may be coupled to the trigger switch 34 and provides the ON/OFF signal according to the state of the trigger assembly 18. In a power tool configured to vary the rotational speed of the motor based on the travel distance of the trigger assembly 18, the input unit 208 may provide a variable-speed signal to the controller 232. Based on the rotor rotational position signals from the position sensors 238 and the ON/OFF and/or variable-speed signal from the input unit 208, controller 232 outputs drive signals UH, VH, WH, UL, VL, and WL through the gate driver 234. Gate driver 234 is provided to output the voltage level needed to drive the gates of the semiconductor switches within the power switch circuit 222 in order to control a PWM switching operation of the power switch circuit 222.

In an embodiment, a power supply regulator (not shown) may be provide including one or more voltage regulators to step down the power supply to a voltage level compatible for operating the controller 232 and/or the gate driver 234. In an embodiment, power supply regulator may include a buck converter and/or a linear regulator to reduce the power voltage from the battery pack (not shown) down to, for example, 15V for powering the gate driver 234, and down to, for example, 3.3V for powering the controller 232.

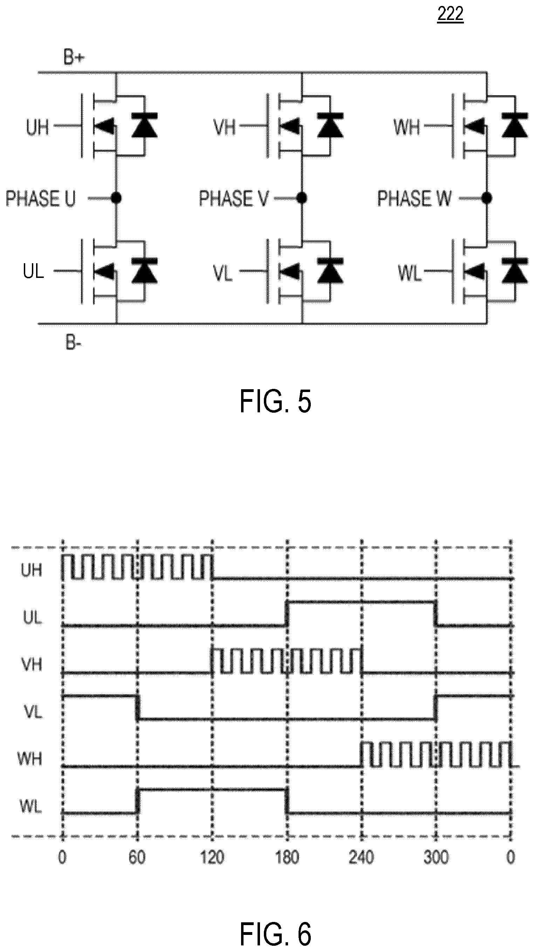

FIG. 5 depicts an exemplary power switch circuit 222 having a three-phase inverter bridge circuit, according to an embodiment. As shown herein, the three-phase inverter bridge circuit includes three high-side switches and three low-side switches. The gates of the high-side switches driven via drive signals UH, VH, and WH, and the gates of the low-side switches are driven via drive signals UL, VL, and WL. In an embodiment, the drains of the high-side switches are coupled to the sources of the low-side switches to output power signals PU, PV, and PW for driving the BLDC motor 100. Further, the sources of the high-side switches are coupled to the B+ node and the drains of the low-side switches are coupled to the B- node. By driving the gates of the switches, the motor controller 232 controls the phase of the motor being energized, and the amount of electric power being delivered.

FIG. 6 depicts an exemplary waveform diagram of a pulse-width modulation (PWM) drive sequence of the three-phase inventor bridge circuit of FIG. 5 within a full 360-degree conduction cycle. As shown in this figure, within a full 360° cycle, each of the drive signals associated with the high-side and low-side power switches is activated during a 120° conduction band ("CB"). In this manner, each associated phase of the BLDC motor is energized within a 120° CB by a pulse-width modulated voltage waveform that is controlled by the control unit 230 as a function of the desired motor rotational speed. For each phase, the high-side switch is pulse-width modulated by the control unit 230 within a 120° CB. During the CB of the high-side switch, the corresponding low-side switch is kept low, but one of the other low-side switches is kept high to provide a current path between the power supply and the motor windings. The motor controller 232 controls the amount of voltage provided to the motor, and thus the speed of the motor, via PWM control of the high-side switches.

Referring once again to FIG. 4, in an embodiment, a shunt resistor 226 may be disposed on the DC bus line 202, on either the B+ or B- (or Ground) node of the DC bus line 202. An operational amplifier 228 is further coupled across the shunt resistor 226. The current through the shunt resistor 226 creates a voltage across the shunt resistor 226 proportional to the current, which is amplified by the operational amplifier 228.

With continued reference to FIG. 4, in an embodiment, control unit 230 may additionally include a comparator 236 that compares the output of the operational amplifier 228, which corresponds to the instantaneous current through the DC bus line 202, to a reference current. In an embodiment, comparator 236 may be a hardware component discretely mounted on the same circuit board as the controller 232, or it may be integrally provided as a part of the same chip as the controller 232. In an example, controller 232 may be a 32-bit Microcontroller including comparator 236 among other hardware components. The reference current inputted to the comparator 236 may be an internal voltage reference controlled by software by the controller 232 to enable the controller to dynamically control the trip levels of the comparator 236. As will be discussed later in detail, this allows the controller 232 to apply a variable current limit to the motor and step back and/or roll back the current limit as needed during high torque conditions to ease the load on the motor.

In an embodiment, control unit 230 may further include an average current detection unit 240. The average current detection unit 240, similar to comparator 236, may be a hardware component discretely mounted on the same circuit board as the controller 232, or it may be integrally provided as a part of the same chip as the controller 232. In an embodiment, average current detection unit 240 receives the output of operational amplifier 228, which is a voltage signal corresponding to the instantaneous current passing through the shunt resistor 226, and outputs an average current of the DC bus line 202 to the controller 232.

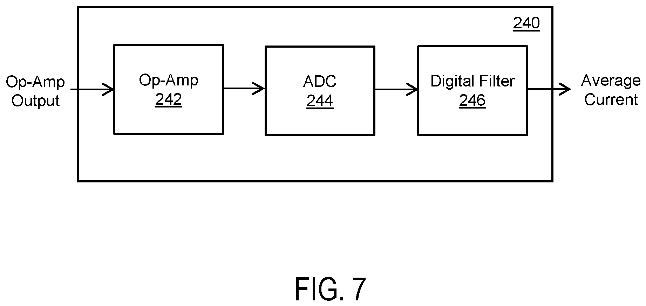

FIG. 7 depicts a block diagram of the average current detection unit 240, according to an embodiment. In an embodiment, average current detection unit 240 includes an operational amplifier 242 that further amplifies the voltage output of the operational amplifier 228, an analog-to-digital converter (ADC) unit 244 that converts the amplified voltage signal to a sample digitized signal, and an averaging digital filter 246 that digitally filters the digital signal to output an average value. This average current represents the average current passing through the shunt resistor 226.

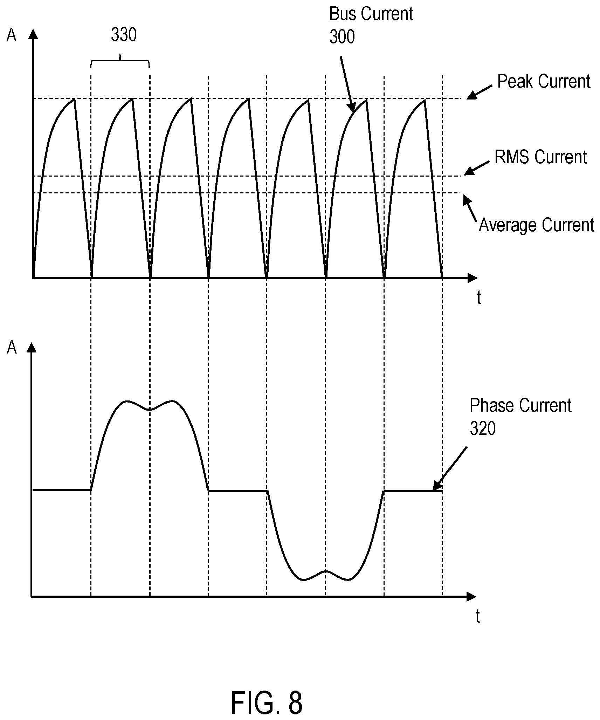

FIG. 8 depicts a waveform diagram of the bus current waveform 300 and the motor phase current waveform 320 through a single phase of the motor, according to an embodiment. In an embodiment, the bus current waveform 300 includes an ocean wave pattern resulting from the switching taking place in the power switch circuit 222 to output the motor phase current waveform 320. In an embodiment, the motor phase current is not sensed directly by the controller 232, as doing so would require addition of shunt resistors to the outputs of the PV, PW, and PU signals of the power switch circuit 222. However, controller 232 can sense the peaks of the bus current waveform 300 within each cycle 330, where each cycle 330 corresponds to one commutation sector of the motor. As shown here, the average current and the RMS current are lower than the peak current on the bus current waveform 300.

In an embodiment, controller 232 may apply a PWM control on the control scheme of the power switch circuit 222. The PWM control would superimpose a ragged pattern in the bus current waveform 300 not shown here.

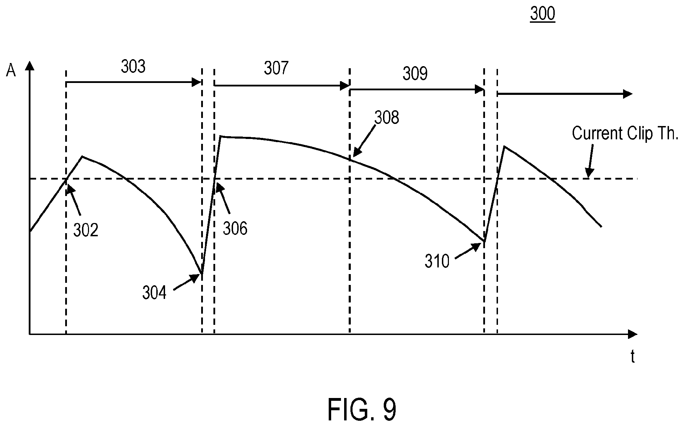

FIG. 9 depicts a partial waveform diagram of the bus current waveform 300 within a single cycle 330 with application of a current clip threshold, i.e., a current limit, according to an embodiment.

The current clip threshold shown herein corresponds to the voltage reference applied to the comparator 236 of FIG. 4, and is a maximum current threshold applied by the controller 232 to the bus current at which level the peak current is to be maintained during each motor commutation sector. In an embodiment, the current clip threshold may be applied on a cycle-by-cycle basis. An example of such execution can be found in US Patent No. 9,762,153 filed May 18, 2015, which is incorporated herein by reference in its entirety.

In an embodiment, when the bus current 300 exceeds the current clip threshold at 302, the controller 232 deactivates the motor drive temporarily by shutting off all the power switches of the power switch circuit 222. This causes the bus current 300 to decay gradually. Meantime, the controller 232 starts a decay countdown to apply a decay period 303 and samples the bus current at 304 at the end of the decay period 303. Since the bus current at 304 is below the current clip threshold, the controller 232 resumes the motor drive. This causes the bus current 300 to exceed the current clip threshold once again at 306, which initiates a subsequent deactivation of the motor drive and the start of another decay period 307. In the illustrated example, the controller 232 samples the bus current at 308 at the end of the decay period 307. Since the bus current at 308 is above the current clip threshold, the controller 232 keeps the motor deactivated and initiates another decay period 309. The controller 232 samples the bus current at 310 at the end of the decay period 309 once again. Since the bus current at 310 is below the current clip threshold, the controller 232 resumes the motor drive. This process continues over the course of the motor drive.

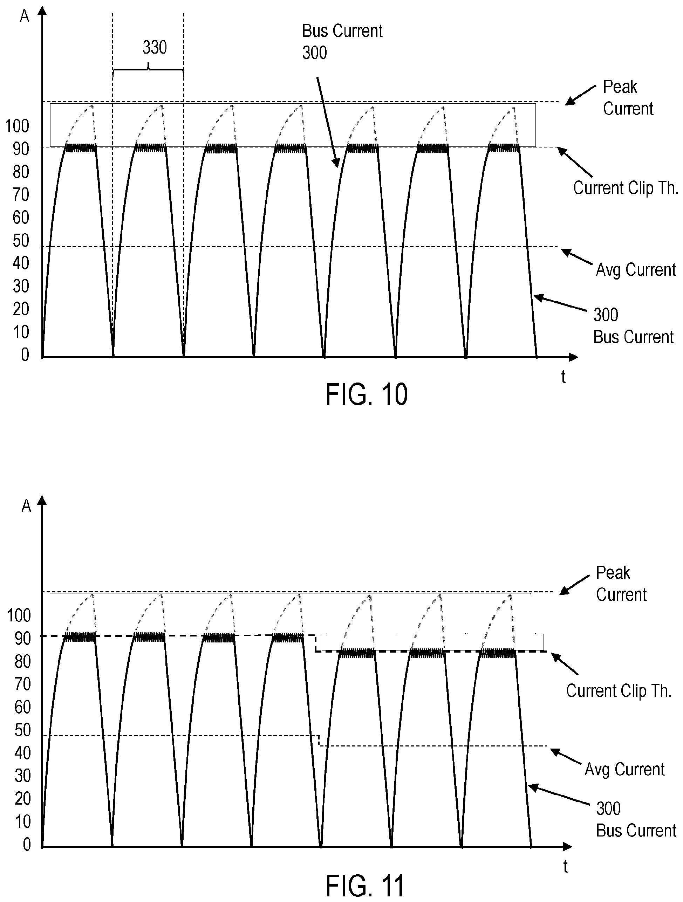

FIG. 10 depicts a waveform diagram of the bus current waveform 300 with the application of the current clip threshold, according to an embodiment. As shown here, using the process described above over the consecutive cycles 330 of the motor drive, the controller 232 clips the peak bus current at approximately the current clip threshold level.

FIG. 11 depicts a waveform diagram of the bus current waveform 300 with the application of a variable current clip threshold, according to an embodiment. Here, the reference voltage supplied to the comparator 236 is not a fixed value. Rather, in an embodiment, the controller 232 dynamically controls the reference voltage, and thus the corresponding current clip threshold, as a function of the bus current, time, and/or temperature of the motor and/or power switches. In an embodiment, the controller 232 may temporarily step back and/or roll back the current clip threshold when current overload and/or over-temperature conditions occur to ensure that the motor is not overloaded or overheated at high current conditions. This causes the peak bus current to be clipped at a lower current clip threshold value. The average current similarly falls to a lower value, which reduces the current passing through the power switch circuit 222 into the motor 100.

Temporary step-back and/or roll-back of the current clip threshold relieves the motor from continuous application of high current and helps with temperature maintenance without having to shut down the motor. Without the temporary step-back and/or roll-back of the current clip threshold as described herein, the motor continues to draw high current from the bus line at high torque conditions, causing it to overheat quickly. With the temporary step-back and/or roll-back of the current clip threshold as described herein, the power output of the motor and the corresponding output speed of the power tool is reduced, and the reduction in the output speed provides feedback to the operator of the power tool to ease off temporarily until the normal operating speed of the power tool is restored. In another example, temporary step-back and/or roll-back of the current clip threshold, as described herein, may be helpful in compact power tools designed to fit into a small diameter housing, as exemplified in FIG. 1, where airflow through the tool is limited and the motor and/or the electronics may be susceptible to overheating in continuous high current applications.

In an embodiment, using what is referred to herein as the "current clip step-back" process, the controller 232 dynamically controls the current clip threshold to bring the peak current clip level gradually lower when the power tool operator pushes the tool at high load conditions for long durations of time. Furthermore, in an embodiment, the controller 232 may bring the peak current clip level further lower when the temperature of the motor and/or power switches becomes too high. Using this process, the controller 232 can scale back the average current passing though the motor temporarily and lower the temperature indirectly. Further, since this process is executed in the background, the controller 232 may apply high default current clip thresholds to the power tool so that the tool performance during normal operational condition is not compromised.

Table 1 below provides an example reference look-up table used by the controller 232 to control the current clip threshold. In an embodiment, the current clip threshold is set to a default value, which in this example is 90 A. The controller compares the average current (i.e., the output of average current detection unit 240) to an average current threshold. In an example, the average current threshold may be 35 A. When the average current exceeds the average current threshold, the controller 232 starts a time counter and sets the timer threshold to 3 seconds in accordance with the table. If the average current continues to exceed the average current threshold after the expiration of the 3 seconds timer threshold, the controller reduces the current clip threshold to 80 A, resets the time counter, and sets the timer threshold to 4 seconds. If the average current continues to exceed the average current threshold after the expiration of the 4 seconds timer threshold, the controller reduces the current clip threshold to 75 A, resets the time counter, and sets the timer threshold to 5 seconds. This process continues in accordance with the look-up table the current clip threshold reaches 35 A and the timer threshold is set to 30 seconds. At this point, the average current is expected to have fallen below the average current threshold.

**TABLE 1**

| | | | | | | | | | |
|---|---|---|---|---|---|---|---|---|---|
| Current Clip Threshold (A) | 90 | 80 | 75 | 70 | 60 | 55 | 50 | 40 | 35 |
| Threshold Time (S) | 3 | 4 | 5 | 10 | 15 | 20 | 22 | 25 | 30 |

Using table 1, at each step, the peak current of the bus line is reduced, which results in a corresponding reduction in the average current supplied to the motor. The reduction of average current to the motor reduces the heat generated by the motor. Further, the corresponding lower output speed of the power tool provides feedback to the user to ease off the application temporarily until the tool returns to its normal operating conditions.

In an embodiment, the controller 232 may further reduce the current clip threshold, and correspondingly the average current supplied to the motor, based on temperature. Here, the temperature may refer to the temperature of the motor (e.g., via a thermistor mounted on the motor 100 or embedded proximate the stator windings 114 of the motor) and/or the temperature of the power switches of the power switch circuit 222 (e.g., via a thermistor mounted on a circuit board proximate the power switches). Table 2 below provides an example reference look-up table used by the controller 232 to scale down the current clip thresholds of Table 1 based on temperature. In an embodiment, the controller may apply the current clip thresholds of Table 1 in ambient temperature of up to 50 degrees C, but it applies a multiplier to scale the current clip thresholds to 50% for temperature of 50 degrees C to 70 degrees C, and to 25% for temperature of 70 degrees C to 100 degrees C. In this manner, the controller 232 sets lower current clip thresholds at higher temperatures to bring down the average current supplied to the motor more quickly.

**TABLE 2**

| | | | |
|---|---|---|---|
| Temperature (C) | < 50 | 50 - 70 | 70-100 |
| Multiplier (%) | 100 | 50 | 25 |

In an embodiment, the controller 232 may additionally adjust the threshold time of Table 1 as a function of the average current. For example, if the average current as calculated by the output of average current detection unit 240 exceeds the current threshold only slightly, the controller 232 may apply current clip threshold and threshold time values in accordance with Table 1. However, if the average current significantly exceeds the current threshold, the controller may scale down the threshold time by a multiplier according to Table 3 below. For example, if the average current is between 55A to 60A, the controller 232 may multiply the threshold times of Table 1 by 85%, and if the average current is between 70A to 75A, the controller 232 may multiply the threshold times of Table 1 by 60%. Using these multipliers, the controller 232 is able to bring down the average current more quickly.

**TABLE 3**

| | | | | | | | | | |
|---|---|---|---|---|---|---|---|---|---|
| Average Current (A) > | 90 | 80 | 75 | 70 | 60 | 55 | 50 | 40 | 35 |
| Threshold Time Multiplier (%) | 24 | 36 | 48 | 60 | 72 | 85 | 100 | 100 | 100 |

In an embodiment, the controller 232 may additionally utilize different look-up tables based on a mode of operation of the power tool. For example, a power tool may include a mode-select switch or speed-select switch on the housing that allows the user to select a mode of operation or a speed range of the tool. For a detailed discussion of a mode-select switch in a power tool, reference is made to US Patent No. 11,855,567, which is incorporated herein by reference. In an embodiment, the controller may utilize tables having different current clip thresholds, threshold times, and/or threshold time multipliers, based on the selected mode of operation. For example, in a grinding tool having a speed-mode interface with four speed modes, the different speed modes of operation have different associated speed profiles. To optimize the look-up tables described above based on the selected speed mode, the controller may utilize at least a first table for lower speed modes of operation and at least a second table for higher speed modes of operation. Tables 4 and 5 below provide two such exemplary tables. In an embodiment, the controller 232 receives the mode of operation from the mode select and/or speed-select switch and sets the current clip thresholds, threshold times, and/or threshold time multipliers tables accordingly.

**TABLE 4**

| Modes 1 and 2 | | | | | | |
|---|---|---|---|---|---|---|
| Current Clip Threshold (A) | 90 | 80 | 75 | 70 | 60 | 55 |
| Threshold Time (S) | 3 | 4 | 5 | 10 | 15 | 20 |

**TABLE 5**

| Modes 3 and 4 | | | | | |
|---|---|---|---|---|---|
| Current Clip Threshold (A) | 60 | 55 | 50 | 40 | 35 |
| Threshold Time (S) | 5 | 10 | 15 | 20 | 25 |

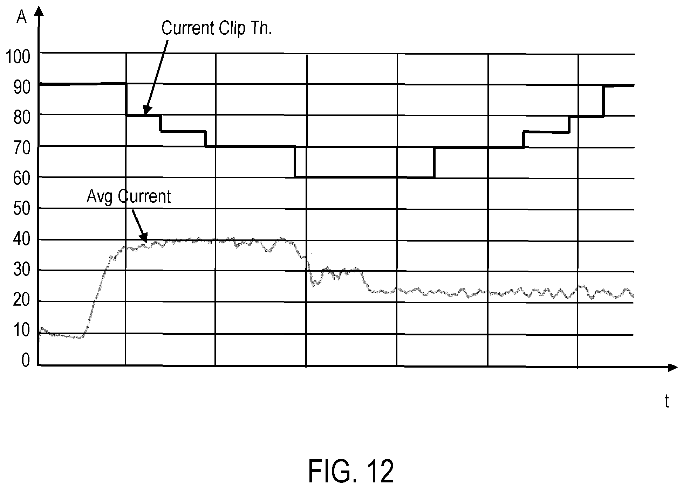

FIG. 12 depicts a waveform diagram of the current clip threshold and the average current, according to an embodiment. The current clip threshold here is controlled by the controller 232 using the above-described current clip step-back process, with the current clip threshold values set in accordance with Table 1. The temperature and average current multipliers of Tables 2 and 3 are not applied in this example. As shown here, after the average current exceeds the average current threshold (e.g., 35 A) for the duration of the threshold time (i.e. 3 seconds), the current clip threshold is reduced from 90 A to 80A. Thereafter, the average current continues to exceed the average current threshold for another 4 seconds, the current clip threshold is therefore further reduced from 80 A to 75A. Thereafter, the average current continues to exceed the average current threshold for another 5 seconds, and the current clip threshold is therefore further reduced from 75 A to 70A. Thereafter, the average current continues to exceed the average current threshold for another 10 seconds, and the current clip threshold is therefore further reduced from 70 A to 60A. The average current finally falls below the average current threshold of 35 A shortly after the current clip threshold falls to 60A. In this example, the average current is approximately 23 A at the conclusion of the threshold time of 15 seconds for the current clip threshold of 60 A. This may be due to the lower amount of current being provided to the motor, and/or due to the operator easing back on the tool operation as a result of the reduction in the output speed of the power tool. At this point, the controller 232 scales up the current clip threshold from 60A to 70A. As long as the average current remains below the average current threshold of 35 A, the controller continues to increase the current clip threshold, e.g., from 70A to 75A after 10 seconds, from 75A to 80A after 5 seconds, and from 80A to 90A after 4 seconds.

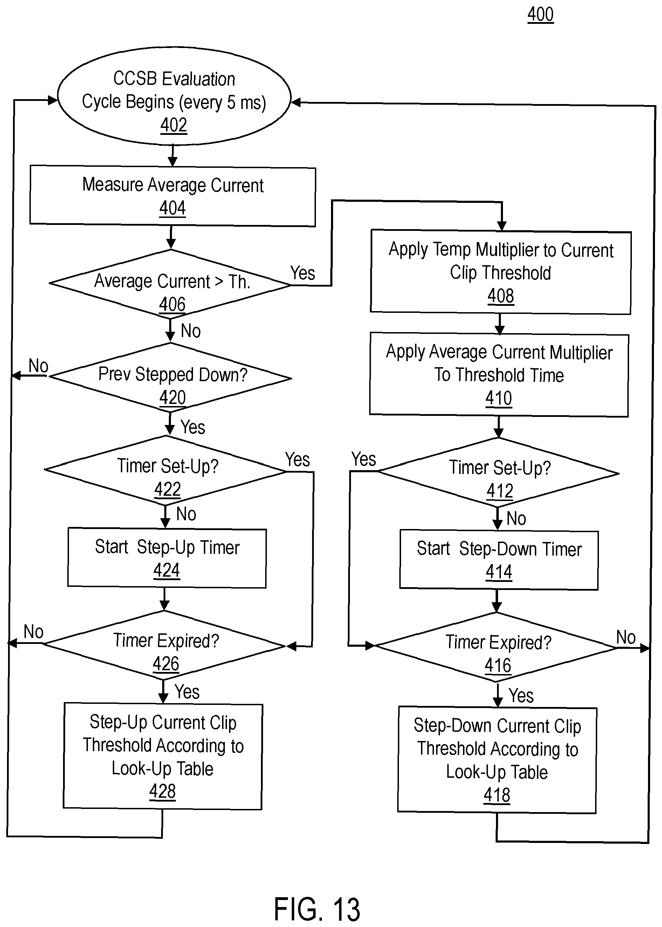

FIG. 13 depicts an example flow diagram of a current clip step-back (CCSB) process 400 executed by the controller 232, according to an embodiment. **In an** embodiment, process 400 starts the at step 402, where the CCSB evaluation cycle begins during the power tool operation. In an embodiment, process 400 continues to step 404, where the average current is measured, e.g., via the average current detection unit 240. In an embodiment, process 400 continues to step 406, where the measured average current is compared to the average current threshold. If the average current exceeds the average current threshold, process 400 continues to steps 408-418 to step down the current clip threshold.

In an embodiment, in step 408, the temperature multiplier is applied to the current clip threshold, as described above with reference to Table 2. In an embodiment, in step 410, the average current multiplier is applied to the threshold time, as described above with reference to Table 3. In an embodiment, in steps 412-416, a step-down timer is started if it has not already, and it is determined if the step-down timer has expired (i.e., reached the threshold time corresponding to the present current clip threshold as shown in Table 1). If the step-down timer has not expired, process 400 returns to step 402. In an embodiment, if the step-down timer has expired, in step 418, the current clip threshold is stepped down to the next threshold level in accordance with Table 1, and the process then returns to step 402.

In an embodiment, if, in step 406, the average current does not exceed the average current threshold, process 400 continues to step 420, where it is determined whether the current clip threshold has been previously stepped down from its default value. If the current clip threshold has not been previously stepped down from its default value, process 400 returns to step 402. In an embodiment, if the current clip threshold has been previously stepped down from its default value, process 400 continues to steps 422-428 to step up the current clip threshold.

In an embodiment, in steps 422-426, a step-up timer is started if it has not already, and it is determined if the step-up timer has expired (i.e., reached the threshold time corresponding to the present current clip threshold as shown in Table 1). If the step-up timer has not expired, process 400 returns to step 402. In an embodiment, if the step-up timer has expired, in step 428, the current clip threshold is stepped up to the previous threshold level in accordance with Table 1, and the process then returns to step 402.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described.

## Claims

1. A tool comprising:
a motor;
a power switch circuit disposed between a power source and the motor; and
a control unit that controls the power switch circuit to drive the motor and is configured to apply a current clip threshold to a current passing through a bus line located between the power source and the power switch circuit to maintain a peak current of the bus line at approximately the current clip threshold, wherein the control unit is configured to variably control the current clip threshold based on the current passing through the bus line.

2. The tool of claim 1, wherein the control unit is configured to detect an average current passing through the bus line, and dynamically control the current clip threshold as a function of the average current.

3. The tool of claim 2, wherein the control unit is configured to step down and/or reduce the current clip threshold if the average current exceeds an average current threshold for a prescribed duration.

4. The tool of claim 3, wherein the control unit is configured to step up and/or increase the current clip threshold if the average current does not exceed the average current threshold for the prescribed duration.

5. The tool of any preceding claim, wherein the control unit is configured to detect an over-current condition on the bus line and reduce the current clip threshold in a stepwise manner as long as the over-current condition persists.

6. The tool of claim 5, wherein the control unit is configured to increase the current clip threshold in a stepwise fashion when the over-current condition is no longer present until a default current clip threshold value is reached.

7. The tool of any preceding claim, wherein the control unit is configured to apply the current clip threshold over a plurality of drive cycles, wherein within a first drive cycle, the control unit shuts off supply of power to the motor for the remainer of the cycle after a measure of instantaneous current exceeds the current clip threshold, and resumes supply of power to the motor at the beginning of a second drive cycle if the measure of instantaneous current is below the current clip threshold.

8. The tool of any preceding claim, wherein the control unit comprises a controller, and a comparator configured to receive a first signal associated with the current passing through the bus line and a second signal associated with the current clip threshold received from the controller, wherein the controller dynamically controls the second signal.

9. The tool of any preceding claim, wherein the control unit further comprises an average current detection unit comprising an analog-to-digital converter and a digital filter to obtain an average current passing through the bus line.

10. The tool of any preceding claim, wherein the controller is configured to further control the current clip threshold as a function of a temperature associated with the motor and/or the power switch circuit.

11. A tool comprising:
a motor;
a power switch circuit disposed between a power source and the motor; and
a control unit that controls the power switch circuit to drive the motor and is configured to apply a current limit to a current passing through a bus line located between the power source and the power switch circuit to cap the current at the current limit over a plurality of drive cycles of the motor, wherein the control unit is configured to detect an average value of the current passing through the bus line and to dynamically set the current limit as a function of the average value of the current.

12. The tool of claim 11, wherein the controller is configured to maintain a peak current of the bus line at approximately the current limit.

13. The tool of claim 11 or claim 12, wherein the control unit is configured to step down and/or reduce the current limit if the average current exceeds an average current threshold for a prescribed duration.

14. The tool of any one of claims 11 to 13, wherein the control unit is configured to apply the current limit over a plurality of drive cycles, wherein within a first drive cycle, the control unit shuts off supply of power to the motor for the remainer of the cycle after a measure of instantaneous current exceeds the current limit, and resumes supply of power to the motor at the beginning of a second drive cycle if the measure of instantaneous current is below the current limit.

15. The tool of any one of claims 11 to 14, wherein the control unit comprises a controller, and a comparator configured to receive a first signal associated with the current passing through the bus line and a second signal associated with the current limit received from the controller, wherein the controller dynamically controls the second signal.
